# EUROPEAN PATENT SPECIFICATION

(11) **EP 4 461 461 B1**
(45) Date of publication and mention of the grant of the patent: **17.12.2025**
(21) Application number: 24175167.6
(22) Date of filing: 10.05.2024
(51) Int. Cl.: B23Q 39/02, B27C 9/02, B27M 1/08

(54) **MACHINE TOOL AND METHOD FOR WORKING WOODEN WORKPIECES**
WERKZEUGMASCHINE UND VERFAHREN ZUR BEARBEITUNG EINES HOLZWERKSTÜCKES
MACHINE OUTIL ET PROCÉDÉ D'USINAGE D'UNE PIÈCE EN BOIS

(30) Priority: 12.05.2023 IT 202300009639
(43) Date of publication of application: 13.11.2024
(73) Proprietor: SCM Group S.p.A., 47921 Rimini (RN) (IT)
(72) Inventor: MECHINI, Fabrizio, c/o SCM Group S.p.A. - Via Emilia, 77 RIMINI - 47921 (IT)
(74) Representative: Gallo, Gianluca

(56) References cited:
- EP-B1- 0 993 903
- CN-A- 102 639 288
- DE-A1- 102019 205 660
- DE-A1- 2 931 363
- DE-T2- 69 530 462

## Description

This invention relates to a machine tool and a method for machining wooden semiproducts.

This invention also relates to a working head for machine tools configured to perform cutting operations on wooden semiproducts.

The invention falls within the manufacturing sector and is applied in particular in the sector of machining wood.

In the sector relevant to this invention, the need is felt of being able to perform different types of machining operations on a same semiproduct without having to move the semiproduct between various machines or between different units of the same machine. In particular, there is a strongly-felt need to be able to mark the semiproducts at the same time as performing further mechanical operations on the semiproduct, such as, for example, cutting operations.

The term "marking" means the operation of marking the semiproduct so as to be able to indicate the parts to be cut, to indicate the direction of the cuts or to label the semiproducts with information on the specifications of the customer or on the destination of the semiproduct by forming alphanumeric characters on the surface of the semiproduct. Also, the marking is used to mark the position of holes or parts to be assembled, thus helping the operators to position the parts correctly during the final assembly.

Multifunction machines are currently known which combine mechanical machining tools and markers. Structurally, these machines comprise a work table defining a supporting surface for the semiproducts and a working head which may be adjustable in height relative to the work table. The working head is provided with a working tool, such as, for example, a cutting tool, and a marking device.

The tool protrudes from the main body of the working head. The choice of the working tool depends on the specific production needs and on the type of material that must be machined.

The marking device protrudes from the main body of the working head and comprises one of the following devices: thin-pointed marking device, paint marking device, electronic ink marking device or laser marking device. The choice of the marking device depends on the specific needs of the production and on the type of wood that has to be marked.

The machines typically also comprise a control unit, used for programming the machine and controlling the machining process, and a movement system which controls at least the movement of the working head relative to the work table.

Examples of this type of machine are disclosed in documents DE102019002840 and DE102019205660 in the name of the same Applicant. DE102019205660 is disclosing the preamble of claim 1.

The Applicant has observed that, even in their most modern implementations, the machines of the type described above have some drawbacks of a functional and/or structural nature which make the use not free of drawbacks.

Firstly, the working tool and the marking device extend in a fixed and permanent manner from the main body of the working head and the latter, for this reason, is particularly bulky. It follows that the entire machine tool, and in particular the relative operating zone, must be oversized to allow an optimum movement of the working head.

Secondly, the marking device is constantly exposed to the working environment: it follows that dust, detritus and generic residue of the material machined repeatedly enter into contact with the marking device, soiling it. One or more of the following problems may therefore occur.

Premature wear of the marking device: dust and waste materials may cause a greater wear of the marking device, leading to a shorter life than that foreseen by the manufacturer.

Reduction of accuracy: if the marking device is covered with dust and debris, the marking accuracy could be compromised. The dust may, for example, interfere with the capacity of the marking device to correctly adhere to the surface of the semiproduct, causing poorly defined or out of position markings.

Difficulty cleaning: if the marking device has been exposed to large amounts of dust and debris, it may be more difficult to remove the dirt and return it to the clean state. This may require the use of expensive and lengthy special maintenance operations and additional cleaning tools.

In this context, the technical purpose of this invention is therefore to provide a machine tool and a method for machining wooden semiproducts as well as a working head for said type of machine tool configured to perform cutting operations on wooden semiproducts which are free of the above-mentioned drawbacks of the prior art.

The aim of this invention is therefore to provide a machine tool and a method for machining wooden semiproducts as well as a working head for this type of machine tool configured to perform cutting operations on wooden semiproducts which allow the overall dimensions to be reduced.

A further aim of this invention is to provide a machine tool and a method for machining wooden semiproducts as well as a working head for this type of machine tool configured to perform cutting operations on wooden semiproducts which allow the structural integrity at least of the marking device to be protected and/or to increase the service life.

A further aim of this invention is to provide a machine tool and a method for machining wooden semiproducts as well as a working head for this type of machine tool configured to perform cutting operations on wooden semiproducts which, at the same time, do not excessively complicate the structure of the device and/or increase the production costs.

The technical purpose indicated and the aims specified are substantially achieved by a machine tool and a method for machining wooden semiproducts as well as a working head for said type of machine tool configured to perform cutting operations on wooden semiproducts comprising the technical features described in one or more of the appended claims. The dependent claims correspond to possible embodiments of the invention.

The machine tool comprises a work table defining a supporting surface for one or more semiproducts to be machined. The work table may be of the fixed or mobile type.

The machine comprises at least one working head configured to operate on the one or more semiproducts.

The machine comprises a movement system configured to move the at least one working head relative to the respective work table.

According to an embodiment, the movement system is also configured for moving the one or more semiproducts on the work table.

The machine comprises a control unit connected to the work table, to the working head and to the movement system. The control unit is configured for controlling the machine tool in such a way as to manage the operations.

Structurally, the working head comprises a main body. In particular, the main body is box-shaped.

According to an embodiment, the main body has an elongate shape along a main axis of extension. In other words, the main body has a predominant dimension of extension.

The main body is provided with a working tool, which is projecting from the main body.

The working tool may be of any type, in accordance with the general nature of the solution. The choice of the working tool depends on the specific production needs and on the type of material that must be machined.

According to an embodiment, the working tool is of the motor-driven type. According to a preferred embodiment, the working tool comprises a cutting tool, such as, for example, a circular saw, a milling cutter, a drill or a blade for wood.

The main body includes a marking device. The marking device may be a contact marking device (for marking by means of an incision, for example) or a spray marking device. The marking device may be of the ink type or of the paint type. The marking device may also be of the electronic ink type or a laser marking device according to the generality of the solution. As with the working tool, the choice of the marking device depends on the specific needs of the production and the type of material that has to be marked. The choice of the type of marking device is independent of the choice of the type of working tool.

According to a particularly advantageous aspect of this invention, the marking device is configured to be switchable between an extracted configuration, wherein the marking device projects from the main body, and a retracted configuration, wherein the marking device is accommodated inside the main body.

The extracted configuration is particularly suitable for the marking operations. Also, the retracted configuration is suitable for disengaging the marking device, that is to say, to a relative non-operating configuration.

This technical feature makes it possible to reduce the dimensions of the working head at least in the retracted configuration of the marking device. Moreover, this technical feature allows the marking device to be protected from the surrounding work environment at least in the relative disengaged configuration and therefore allows the marking device to be protected from the dust and detritus which would otherwise be deposited on the marking device.

According to an embodiment, in the retracted configuration, the marking device is inserted in its entirety in the main body. In other words, in the retracted configuration, the marking device does not have portions projecting outside the main body.

According to alternative embodiments, the marking device is only partly inserted inside the main body.

The working head also comprises a drive mechanism configured to allow a movement of the marking device between the extracted configuration and the retracted configuration and vice versa.

According to an aspect of the invention, the main body has a containing space dedicated to housing at least the marking device and the drive mechanism.

The containing space may be made in a peripheral portion of the main body. Preferably, the containing space is made on an external wall of the main body.

Advantageously, this feature allows the marking device to be easily reached by an operator and to facilitate any maintenance or replacement operations.

According to a preferred embodiment of the machine tool, the main body comprises a supporting plate connected to the above-mentioned movement system. The supporting plate defines the above-mentioned external wall in which the containing space is made for housing at least the marking device and the drive mechanism. According to that embodiment, the main body also comprises a motor stably fixed to the supporting plate and connected to the working tool for actuating the working tool. According to an example, the motor is of the electric type.

In other words, according to this embodiment, the working tool is connected to and projected from the motor whilst the marking device is accommodated in the supporting plate.

According to an aspect of the invention, the working tool and the marking device are mounted on separate portions of the main body.

According to a preferred embodiment, the working tool and the marking device are mounted on opposite ends of the main body. In other words, the working tool and the marking device are mounted in such a way as to be oriented on opposite directions of the working head.

According to an aspect of the invention, the supporting plate is rotatably connected to the movement system of the machine. In particular, the working head can be moved in rotation so as to selectively set up the working tool or the marking device for operating on the semiproduct.

If the working tool and the marking device are mounted on opposite ends of the main body, the working head can be rotated by the movement system by 180°.

Irrespective of the position for making the containing space, the working head may comprise a cover dedicated to the covering of the containing space.

According to an embodiment, the drive mechanism is configured for making a sliding coupling between the main body and the marking device. According to this embodiment, the marking device can be moved along a rectilinear trajectory between the extracted configuration and the retracted configuration and vice versa. If the main body has an elongate shape, the rectilinear trajectory is parallel to the above-mentioned main axis of extension.

According to an alternative embodiment, the drive mechanism is configured for forming a pin between the main body and the marking device. According to this embodiment, the marking device is therefore pivoting along a circular trajectory between the extracted configuration and the retracted configuration and vice versa. In other words, the marking device is moved in rotation about the above-mentioned pin from the extracted configuration to the retracted configuration and vice versa. In particular, in the retracted configuration, the marking device is substantially adherent to a wall of the containing space. According to an example, the device describes an arc of 180° between the extracted configuration and the retracted configuration and vice versa.

According to an alternative embodiment of the working head, the drive mechanism comprises at least one operating arm provided with a first end pivoted to the main body and a second end, opposite the first end, pivoted to the marking device. According to this embodiment, the marking device can be moved along a trajectory of roto-translation relative to the main body between the extracted configuration and the retracted configuration and vice versa.

According to an aspect of the invention, independent of the structure of the drive mechanism, the working head may comprise an actuator connected to the drive mechanism and to the control unit. In particular, the actuator is configured at least for moving the marking device between the extracted configuration and the retracted configuration and vice versa. According to an example, the actuator is of the pneumatic type. Alternatively, the actuator may be of the hydraulic or electric type. If present, the actuator is also accommodated in the above-mentioned containing space. Despite the presence of the actuator, the marker may be switched manually by an operator between the two configurations.

According to an alternative embodiment, the actuator is not provided and the marking device can only be switched manually by an operator between the two configurations.

This invention also relates to a working head for the above-mentioned type of machine tool, which is configured to perform cutting operations on wooden semiproducts.

This invention also relates to a method for machining wooden semiproducts.

According to a preferred embodiment, the method is implemented using the above-mentioned machine tool for machining wooden semiproducts.

The method comprises a step of feeding one or more semiproducts on the work table.

The method comprises a step of machining the semiproduct using the working tool mounted on the main body of the working head.

According to a non-limiting example embodiment, the working tool is a cutting tool and at least one cutting operation is performed on the semiproduct in the machining step.

The method comprises a step of marking the semiproduct by means of the marking device mounted on the main body of the working head.

According to an aspect of the invention, in the step of marking the semiproduct, the marking device is switched between the retracted configuration, wherein the marking device is accommodated inside the main body, and the extracted configuration, wherein the marking device is projecting from the main body and vice versa.

According to an example, before marking the semiproduct, the marking device is switched from the retracted configuration to the extended configuration. Once the marking of the semiproduct has been completed, the marking device is switched from the extracted configuration to the retracted configuration.

According to an embodiment of the method, during the step of marking the semiproduct, the marking device can be moved along a rectilinear trajectory between the extracted configuration and the retracted configuration and vice versa.

According to a further embodiment of the method, during the step of marking the semiproduct, the marking device can be moved along a circular trajectory between the extracted configuration and the retracted configuration and vice versa. In other words, according to this embodiment, the marking device pivots between the two configurations.

According to a further embodiment of the method, during the step of moving the semiproduct, the marking device can be moved along a trajectory of roto-translation between the extracted configuration and the retracted configuration and vice versa.

According to an aspect of this invention, irrespective of the type of movement, in the retracted configuration the marking device is at a first distance from the working tool whilst in the extracted configuration the marking device is at a second distance from the working tool. The second distance may be greater than the first distance.

According to an aspect of the invention, during the step of marking the semiproduct, the marking device can be moved between the extracted configuration and the retracted configuration and vice versa by means of an actuator.

According to an aspect of this invention, if the working tool and the marking device are mounted on opposite ends of the main body of the working head, the method comprises a step of rotating the working head by means of the movement system of the machine tool so as to selectively set up the working tool or the marking device to operate on the semiproduct. The step of rotating the working head is interposed between the step of machining the semiproduct and the step of marking the semiproduct. According to an example, the working head is rotated by 180° to selectively set up the working tool and the marking device.

Further features and advantages of this invention are more apparent in the non-limiting description which follows of a non-exclusive embodiment of a cutting and marking working head and of a machine tool comprising the cutting and marking working head.

The description is set out below with reference to the accompanying drawings which are provided solely for purposes of illustration without restricting the scope of the invention and in which:
- Figure 1 is a perspective view of a preferred, non-limiting example embodiment of a machine tool for machining wooden semiproducts according to this invention;
- Figure 1a is an enlargement of Figure 1 and shows in detail a component of the machine tool of Figure 1;
- Figure 2 is a side view of the embodiment of the machine of Figure 1, in a first operating configuration;
- Figure 3 is a side view of the embodiment of the machine of Figure 1, in a second operating configuration.

In the accompanying drawings, the numeral "100" denotes in its entirety a machine tool (illustrated schematically and only partly in the accompanying drawings). The machine tool 100 is classified in the manufacturing sector and is used in particular in the machining of wooden semiproducts. Preferably, the machine tool 100 is used in the machining of wood.

The machine tool 100 comprises a work table (not illustrated) defining a supporting surface on which one or more semiproducts to be machined are positioned. The work table may be of the fixed or mobile type.

The machine tool 100 comprises an above-mentioned working head 1 which is adjustable at least towards and away from the work table. For this purpose, the machine tool 100 comprises a system 110 for moving the working head 1 configured to allow and actuate the movement of the working head 1 at least relative to the work table. The movement system 110 may also be configured for moving the one or more semiproducts on the work table.

The machine tool 100 also comprises a control unit "U" connected to the work table, to the working head 1 and to the movement system 110. The control unit is configured for controlling the machine tool 100. In other words, the control unit "U" is configured for controlling the machining and in particular for controlling and moving and actuating the working head 1.

The machine tool 100 may also comprise a safety system for protecting the operator during the machining. The system may include protection screens, emergency switches, safety sensors and/or other components.

A preferred embodiment of the working head 1 is now illustrated in detail.

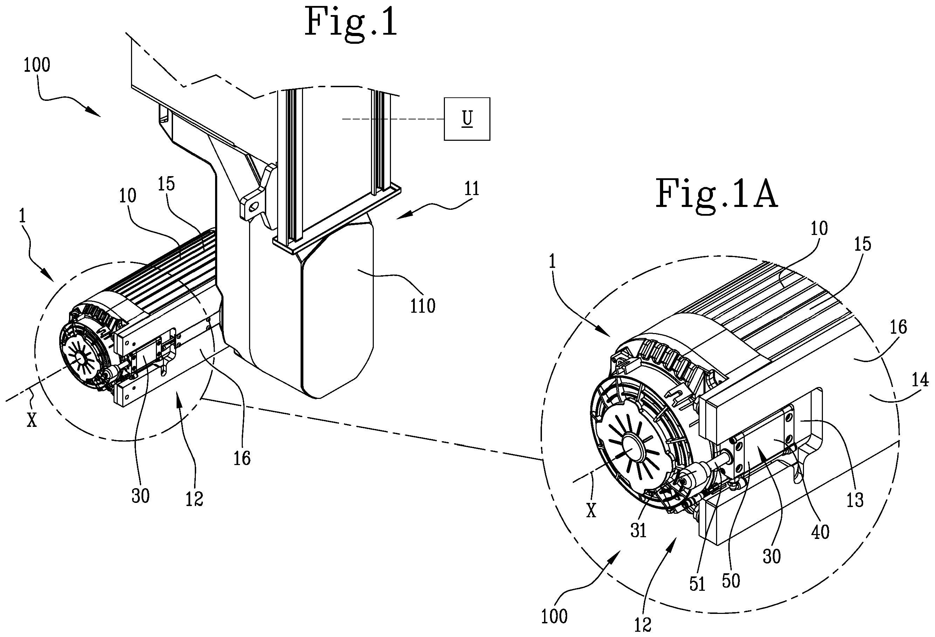

As shown in Figures 1 and 1a, the working head 1 comprises a main box-shaped body 10. The main body has a first portion 11 and a second portion 12, different from the first portion 11.

The main body 10 has an elongate shape along a main axis of extension "X": the first portion 11 and the second portion 12 of the main body 10 are made on opposite ends of the main body 10.

The main body 10 is provided with a working tool 20 mounted on the first portion 11 so as to be projecting from the first portion 11.

The working tool 20 is preferably a cutting tool (for example a blade positioned in a plane at right angles to the main axis of extension X). Preferably, the working tool 20 is of the motor-driven type.

According to alternative embodiments not illustrated, the working tool 20 is configured for performing operations different from the cutting operations.

The working head 1 comprises a marking device 30, mounted in the second portion 12 of the main body 10. The marking device 30.

According to the preferred embodiment, therefore, the working tool 20 is mounted on the first end of the main body 10 (corresponding to the first portion 11 of the main body 10). According to an example, the marking device 30 is mounted on the second end of the main body 10, opposite the first end (corresponding to the second portion 12 of the main body 10).

The marking device 30 may be either a contact marking device or a spray marking device. The marking device 30 may be of the ink type or of the paint type. The marking device 30 may also be of the electronic ink type or a laser marking device according to the generality of the solution. The choice of the marking device 30 depends on the specific needs of the production and on the type of material that has to be marked. The choice of the type of marking device 30 is not, however, correlated with the choice of the type of working tool 20. Preferably, the marking device 30 is a contact marking device and comprises a marking head 31.

The marking device 30 is configured to be switchable between an extracted configuration, wherein the marking device 30 projects from the main body (and in particular from the second portion 12 of the main body 10), and a retracted configuration, wherein the marking device 30 is accommodated inside the main body 10 (and in particular inside the second portion 12 of the main body 10).

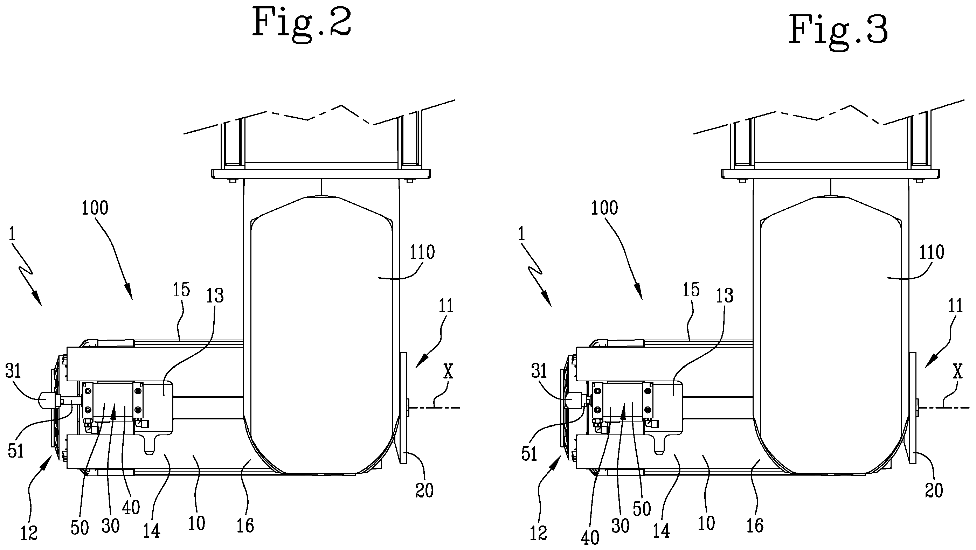

The extracted configuration is suitable for the marking operations of the marking device 30 and is illustrated by way of example in Figure 2.

The retracted configuration is a disengaged configuration of the marking device 30 and is illustrated by way of example in Figure 3.

Preferably, in the retracted configuration, the marking device 30 is inserted in its entirety in the main body 10. In other words, in the retracted configuration, the marking device 30 does not have portions projecting outside the main body 10.

The working head 1 comprises a drive mechanism 40 configured to allow a movement of the marking device 30 between the extracted configuration and the retracted configuration and vice versa.

Preferably, the movement mechanism 40 comprises an actuator 50 configured for moving the marking device 30 between the extracted configuration and the retracted configuration and vice versa. The actuator 50 is connected to the control unit "U" and can be operated by the latter. Preferably, the actuator 50 is of the pneumatic type. Despite the presence of the actuator 50, the switching of the marking device 30 between the two configurations may in any case be performed manually by an operator.

The main body 10 has a containing space 13 dedicated to housing at least the marking device 30 and the drive mechanism 40. According to the preferred embodiment, the containing space is configured for also housing the actuator 50. Preferably, the containing space 13 is substantially shaped to match the structure of the marking device 30 and/or shaped to match a movement path of the marking device 30 between the two configurations.

Structurally, the containing space 13 is made in a peripheral portion of the main body 10. Preferably, the containing space 13 is made on an external wall 14 of the main body 10. There may also be a cover for covering the containing space 13 (not illustrated in the accompanying drawings).

According to the embodiment illustrated in the accompanying drawings, the main body 10 comprises a supporting plate 16 connected to the above-mentioned movement system 110. The supporting plate 16 defines the above-mentioned external wall 14 in which the containing space 13 is made for housing at least the marking device 30 and the drive mechanism 40. According to that embodiment, the main body 10 also comprises a motor 15 stably fixed to the supporting plate 16 and connected to the working tool 20 for actuating the working tool 20. In other words, the motor 15 for actuating the working tool 20 is connected to the control unit "U" and to the working tool 20 and configured for operating the working tool 20. Preferably, the motor 15 is an electric motor.

In other words, according to this embodiment, the working tool 20 is connected to and projects from the motor 15 whilst the marking device 30 is accommodated in the supporting plate 16.

According to an aspect, the supporting plate 16 is rotatably connected to the movement system 110 of the machine tool 100. In particular, the working head 1 can be moved in rotation so as to selectively set up the working tool 20 or the marking device 30 to operate on the semiproduct.

According to the embodiment illustrated, the drive mechanism 40 is configured for forming a sliding coupling between the main body 10 and the marking device 30: the marking device 30 can therefore be moved along a rectilinear trajectory between the extracted configuration and the retracted configuration and vice versa.

According to an example, the drive mechanism 40 comprises an actuator 50 of the pneumatic or electric type and comprises a piston 51 (that is to say, a stem or defining a stem) movable by translation along said rectilinear trajectory (which is preferably parallel to the main axis of extension X). According to an example, the actuator 50 also includes a cylinder (not illustrated), inside of which the stem 51 is inserted (which coincides with the piston or is connected to the piston). According to an aspect of this invention, the stem 51 is connected to the marking head 31. According to an example, the stem 51 has one end (the free end projecting away from the cylinder) which is hollow and the marking head 31 is engaged in the stem 51. In other words, the stem 51 is configured to house the marking head 31 in the cavity.

Preferably, the rectilinear trajectory is parallel to the main axis of extension "X". In this embodiment, the containing space 13 is defined by a recess which is substantially rectangular in shape and whose length is greater than the marking device 30 so as to allow the marking device 30 to move between the two configurations.

Preferably, in the retracted configuration, the marking device 30 is at a first distance from the working tool 20 and in the extracted configuration, the marking device 30 is at a second distance from the working tool 20, greater than said first distance.

According to an alternative embodiment not illustrated, the drive mechanism 40 is configured for forming a pivot between the main body 10 and the marking device 30: the marking device 30 tilts along a circular trajectory between the extracted configuration and the retracted configuration and vice versa.

According to a further alternative embodiment not illustrated, the drive mechanism 40 comprises at least one operating arm 40 having a first end pivoted to the main body 10 and a second end, opposite the first end, pivoted to the marking device 30: the marking device 30 can be moved along a trajectory of roto-translation relative to the main body 10 between the extracted configuration and the retracted configuration and vice versa.

This invention also relates to a working head 1 for machine tools 100, which is configured to perform cutting operations on wooden semiproducts.

This invention also relates to a method for machining wooden semiproducts. Preferably, the method is actuated by the above-mentioned machine tool 100 for machining wooden semiproducts.

The method comprises a step of feeding one or more semiproducts on the work table.

The method comprises a step of machining the semiproduct using the working tool 20 mounted on the main body 10 of the working head 1. Preferably, the working tool 1 is a cutting tool and at least one cutting operation is performed on the semiproduct in the machining step.

The method comprises a step of marking the semiproduct by means of the marking device 30 mounted on the main body 10 of the working head 1.

According to an aspect of this invention, in the step of marking the semiproduct, the marking device 30 is switched between the retracted configuration, wherein the marking device 30 is accommodated inside the main body 10, and the extracted configuration, wherein the marking device 30 extends from the main body 10 and vice versa.

According to the preferred embodiment of the method, before marking the semiproduct, the marking device 30 is switched from the retracted configuration to the extended configuration. Once the marking of the semiproduct has been completed, the marking device 30 is switched from the extracted configuration to the retracted configuration.

According to the preferred embodiment of the method, during the step of marking the semiproduct, the marking device 30 can be moved along a rectilinear trajectory between the extracted configuration and the retracted configuration and vice versa.

According to alternative embodiments, during the step of marking the semiproduct, the marking device 30 can be moved along a circular trajectory between the extracted configuration and the retracted configuration and vice versa. In other words, In other words, the marking device 30 pivots between the two configurations.

According to alternative embodiments, during the step of moving the semiproduct, the marking device 30 can be moved along a trajectory of roto-translation between the extracted configuration and the retracted configuration and vice versa.

According to the preferred embodiment, in the retracted configuration the marking device 30 is at a first distance from the working tool 20 whilst in the extracted configuration the marking device is at a second distance from the working tool. The second distance may be greater than the first distance.

According to the preferred embodiment, during the step of marking the semiproduct, the marking device 30 can be moved between the extracted configuration and the retracted configuration and vice versa by means of the actuator 50.

According to the preferred embodiment, the working tool 20 and the marking device 30 are mounted on opposite ends of the main body 10 of the working head 1 and the method comprises a step of rotating the working head 1 by means of the movement system 110 of the machine tool 100 so as to selectively set up the working tool 20 or the marking device 30 to operate on the semiproduct. The step of rotating the working head 1 is interposed between the step of machining the semiproduct and the step of marking the semiproduct. Preferably, the working head 1 is rotated by 180° to selectively set up the working tool 20 and the marking device 30.

The invention achieves the above-mentioned aims, eliminating the drawbacks highlighted in the prior art: in this regard, it should be noted that the possible switching of the marking device 30 between an extracted configuration, suitable for the marking operations, and a retracted configuration, wherein the marking device 30 is accommodated inside the main body 10, reduces the dimensions of the working head 1. This technical feature therefore allows the machine tool 100 and in particular the working zone of the working head 1 to be optimally sized.

The possibility of switching the marking device 30 between the two configurations also allows the marking device 30 to be protected from the working environment of the machine tool 100 and in particular from dust and detritus which could soil and damage the marking device 30 during the operations. This technical feature therefore makes it possible to protect the structural integrity of the marking device 30 and to increase its service life.

It should also be noted that the working head 1 as claimed and/or does not determine an excessive increase in the structural complexity of the working head, to the advantage of costs and production times of the working head 1 as well as of the machine tool 100.

## Claims

1. A machine tool (100) for machining wooden semiproducts, comprising:
- a work table defining a supporting surface for one or more semiproducts to be machined;
- a working head (1) configured to work on the semiproducts and comprising a main, box-shaped body (10) provided with a working tool (20) extending from the main body (10), and a marking device (30);
- a movement system (110) configured to move at least the working head (1) relative to the work table;
- a control unit (U) configured to control the machine tool (100);
**characterized in that** the marking device (30) is configured to be switchable between an extracted configuration, in which the marking device (30) extends outwards from the main body (10), and a retracted configuration, in which the marking device (30) is housed inside the main body (10), and wherein the working head (1) comprises a drive mechanism (40) configured to allow the marking device (30) to be moved between the extracted configuration and the retracted configuration and vice versa.

2. The machine tool (100) according to claim 1, wherein the main body (10) is elongated in shape along a main axis of extension (X).

3. The machine tool (100) according to claim 1 or 2, wherein the working tool (20) and the marking device (30) are mounted on opposite ends of the main body (10).

4. The machine tool (100) according to any one of the preceding claims, wherein the main body (10) is provided with a containing space (13) for housing at least the marking device (30) and the drive mechanism (40); the containing space (13) being formed in a peripheral portion of the main body (10), the containing space (13) being preferably formed in an external wall (14) of the main body (10).

5. The machine tool (100) according to claim 4, wherein the main body (10) comprises:
- a supporting plate (16) rotatably connected to the movement system and defining the external wall (14) in which the containing space (13) is formed;
- a motor (15), preferably electrical, fixed securely to the supporting plate (16) and connected to the working tool (20) to drive the working tool (20).

6. The machine tool (100) according to any one of the preceding claims, wherein the drive mechanism (40) is configured to create a sliding coupling between the main body (10) and the marker (30); the marker (30) being movable along a rectilinear trajectory between the extracted configuration and the retracted configuration and vice versa.

7. The machine tool (100) according to claim 6 when dependent on claim 2, wherein the rectilinear trajectory is parallel to the main axis of extension (X).

8. The machine tool (100) according to any one of the preceding claims, wherein the drive mechanism (40) comprises an actuator (50) provided with a stem (51 connected to the control unit (U) and configured to move the marking device (30) between the extracted configuration and the retracted configuration and vice versa, the marking device being positioned at one end of the stem (51).

9. The machine tool (100) according to claim 8, wherein the end of the stem (51) defines a housing and the marking head (31) of the marking device (30) is accommodated in the housing.

10. A working head (1) for machine tools (100), configured to perform cutting processes on wooden semiproducts, comprising:
a main body (10) comprising a supporting plate, connectable rotatably to a movement system (110) and provided with a containing space (13), and an electrical motor (15), fixed to the supporting plate (16); the main body (10) being provided with a working tool (20), in particular a cutting tool, connected to the motor (15), and a marking device (30), housed in the containing space (13);
**characterized in that** the marking device is configured to be switchable between an extracted configuration, in which the marking device (30) projects outwards from the main body (10), and a retracted configuration, in which the marking device (30) is housed inside the main body (10), and wherein the working head (1) comprises a drive mechanism (40) configured to allow the marking device (30) to be moved between the extracted configuration and the retracted configuration and vice versa.

11. The working head (1) according to claim 10, wherein the working tool (20) and the marking device (30) are mounted on opposite ends of the main body (10).

12. A method for machining elongated, wooden semiproducts, comprising the following steps:
- feeding a semiproduct onto a work table;
- machining the semiproduct with a working tool (20) mounted on a main body (10) of a working head (1);
- marking the semiproduct with a marking device (30) mounted on the main body (10) of the working head (1);
**characterized in that** the marking device (30), or a part thereof comprising a marking head, is switched between a retracted configuration in which the marking device (30) or the part of it comprising a marking head, is housed inside the main body (10), and an extracted configuration, in which the marking device (30) or the part of it comprising a marking head, extends outwards from the main body (10), and vice versa.

13. The method according to claim 12, wherein the marking device (30) or the part of it comprising a marking head, is moved by an actuator (50) along a rectilinear trajectory between the extracted configuration and the retracted configuration and vice versa.

14. The method according to claim 13, wherein, in the retracted configuration, the marking device (30) or the part of it comprising a marking head, is at a first distance from the working tool (20) and, in the extracted configuration, the marking device (30) or the part of it comprising a marking head, is at a second distance from the working tool (20), greater than the first distance.

15. The method according to any one of claims 12 to 14, wherein the working tool (20) and the marking device (30) are mounted on opposite ends of the main body (10) of the working head (1), and wherein the method comprises a step of rotating the working head (1) via a movement system (110) of the machine tool (100) so as to selectively set the working tool (20) of the marking device (30) to work on the semiproduct; the step of rotating the working head (1) being performed between the step of machining the semiproduct and the step of marking the semiproduct.

16. The method according to any one of claims 12 to 15, wherein the working tool (20) is a cutting tool and wherein, in the step of machining the semiproduct, at least one cutting operation is performed on the semiproduct.

## Patentansprüche

1. Werkzeugmaschine (100) zur Bearbeitung von Holzhalbfertigerzeugnissen, umfassend:
- einen Arbeitstisch, der eine Stützoberfläche für ein oder mehrere zu bearbeitende Halbfertigerzeugnisse definiert;
- einen Arbeitskopf (1), der ausgelegt ist, um auf den Halbfertigerzeugnissen zu arbeiten, und der einen kastenförmigen Hauptkörper (10) umfasst, der mit einem Arbeitswerkzeug (20) versehen ist, das sich vom Hauptkörper (10) erstreckt, und eine Markiervorrichtung (30) ;
- ein Bewegungssystem (110), das ausgelegt ist, um zumindest den Arbeitskopf (1) relativ zum Arbeitstisch zu bewegen;
- eine Steuereinheit (U), die ausgelegt ist, um die Werkzeugmaschine (100) zu steuern,
**dadurch gekennzeichnet, dass** die Markiervorrichtung (30) ausgelegt ist, um zwischen einer ausgefahrenen Auslegung, in der sich die Markiervorrichtung (30) vom Hauptkörper (10) nach außen erstreckt, und einer eingefahrenen Auslegung, in der die Markiervorrichtung (30) innerhalb des Hauptkörpers (10) untergebracht ist, umschaltbar ist, und wobei der Arbeitskopf (1) einen Antriebsmechanismus (40) umfasst, der ausgelegt ist, um der Markiervorrichtung (30) zu erlauben, zwischen der ausgefahrenen Auslegung und der eingefahrenen Auslegung und umgekehrt bewegt zu werden.

2. Werkzeugmaschine (100) nach Anspruch 1, wobei der Hauptkörper (10) in der Form entlang einer Hauptausdehnungsachse (X) langgestreckt ist.

3. Werkzeugmaschine (100) nach Anspruch 1 oder 2, wobei das Arbeitswerkzeug (20) und die Markiervorrichtung (30) auf entgegengesetzten Enden des Hauptkörpers (10) montiert sind.

4. Werkzeugmaschine (100) nach einem der vorhergehenden Ansprüche, wobei der Hauptkörper (10) mit einem Fassungsraum (13) zur Unterbringung von mindestens der Markiervorrichtung (30) und des Antriebsmechanismus (40) versehen ist,
wobei der Fassungsraum (13) in einem umfangsseitigen Abschnitt des Hauptkörpers (10) ausgeformt ist und der Fassungsraum (13) vorzugsweise in einer externen Wand (14) des Hauptkörpers (10) ausgeformt ist.

5. Werkzeugmaschine (100) nach Anspruch 4, wobei der Hauptkörper (10) Folgendes umfasst:
- eine Stützplatte (16), die drehbar mit dem Bewegungssystem verbunden ist und die externe Wand (14) definiert, in der der Fassungsraum (13) ausgeformt ist;
- einen vorzugsweise elektrischen Motor (15), der sicher an der Stützplatte (16) fixiert und mit dem Arbeitswerkzeug (20) verbunden ist, um das Arbeitswerkzeug (20) anzutreiben.

6. Werkzeugmaschine (100) nach einem der vorhergehenden Ansprüche, wobei der Antriebsmechanismus (40) ausgelegt ist, um eine Gleitkupplung zwischen dem Hauptkörper (10) und dem Markierer (30) zu schaffen, wobei der Markierer (30) entlang einer geradlinigen Bahn zwischen der ausgefahrenen Auslegung und der eingefahrenen Auslegung und umgekehrt bewegbar ist.

7. Werkzeugmaschine (100) nach Anspruch 6, wenn abhängig von Anspruch 2, wobei die geradlinige Bahn parallel zur Hauptachse (X) verläuft.

8. Werkzeugmaschine (100) nach einem der vorhergehenden Ansprüche, wobei der Antriebsmechanismus (40) einen Aktuator (50) umfasst, der mit einem Schaft (51) versehen ist, der mit der Steuereinheit (U) verbunden und ausgelegt ist, um die Markiervorrichtung (30) zwischen der ausgefahrenen Auslegung und der eingefahrenen Auslegung und umgekehrt zu bewegen, wobei die Markiervorrichtung an einem Ende des Schafts (51) positioniert ist.

9. Werkzeugmaschine (100) nach Anspruch 8, wobei das Ende des Schafts (51) eine Einhausung definiert und der Markierkopf (31) der Markiervorrichtung (30) in der Einhausung untergebracht ist.

10. Arbeitskopf (1) für Werkzeugmaschinen (100), der ausgelegt ist, um Schneidprozesse auf Holzhalbfertigerzeugnissen durchzuführen, umfassend:
einen Hauptkörper (10), umfassend eine Stützplatte, die drehbar mit einem Bewegungssystem (110) verbindbar und mit einem Fassungsraum (13) versehen ist, sowie einen Elektromotor (15), der an der Stützplatte (16) fixiert ist, wobei der Hauptkörper (10) mit einem Arbeitswerkzeug (20), insbesondere einem Schneidwerkzeug, versehen ist, das mit dem Motor (15) verbunden ist, und einer Markiervorrichtung (30), die in dem Fassungsraum (13) untergebracht ist,
**dadurch gekennzeichnet, dass** die Markiervorrichtung ausgelegt ist, um zwischen einer ausgefahrenen Auslegung, in der die Markiervorrichtung (30) vom Hauptkörper (10) nach außen hervorsteht, und einer eingefahrenen Auslegung, in der die Markiervorrichtung (30) innerhalb des Hauptkörpers (10) untergebracht ist, umschaltbar ist, und wobei der Arbeitskopf (1) einen Antriebsmechanismus (40) umfasst, der ausgelegt ist, um der Markiervorrichtung (30) zu erlauben, zwischen der ausgefahrenen Auslegung und der eingefahrenen Auslegung und umgekehrt bewegt zu werden.

11. Arbeitskopf (1) nach Anspruch 10, wobei das Arbeitswerkzeug (20) und die Markiervorrichtung (30) auf entgegengesetzten Enden des Hauptkörpers (10) montiert sind.

12. Verfahren zur Bearbeitung langgestreckter Holzhalbfertigerzeugnisse, umfassend die folgenden Schritte:
- Zuführen eines Halbfertigerzeugnisses auf einen Arbeitstisch;
- Bearbeiten des Halbfertigerzeugnisses mit einem Arbeitswerkzeug (20), das auf einem Hauptkörper (10) eines Arbeitskopfs (1) montiert ist;
- Markieren des Halbfertigerzeugnisses mit einer Markiervorrichtung (30), die auf dem Hauptkörper (10) des Arbeitskopfs (1) montiert ist,
**dadurch gekennzeichnet, dass** die Markiervorrichtung (30) oder ein Teil davon, der einen Markierkopf umfasst, zwischen einer eingefahrenen Auslegung, in der die Markiervorrichtung (30) oder deren Teil, der einen Markierkopf umfasst, innerhalb des Hauptkörpers (10) untergebracht ist, und einer ausgefahrenen Auslegung, in der sich die Markiervorrichtung (30) oder deren Teil, der einen Markierkopf umfasst, vom Hauptkörper (10) nach außen erstreckt, und umgekehrt umschaltbar ist.

13. Verfahren nach Anspruch 12, wobei die Markiervorrichtung (30) oder deren Teil, der einen Markierkopf umfasst, von einem Aktuator (50) entlang einer geradlinigen Bahn zwischen der ausgefahrenen Auslegung und der eingefahrenen Auslegung und umgekehrt bewegt wird.

14. Verfahren nach Anspruch 13, wobei sich die Markiervorrichtung (30) oder deren Teil, der einen Markierkopf umfasst, in der eingefahrenen Auslegung an einem ersten Abstand von dem Arbeitswerkzeug (20) befindet und sich die Markiervorrichtung (30) oder deren Teil, der einen Markierkopf umfasst, in der ausgefahrenen Auslegung an einem zweiten Abstand von dem Arbeitswerkzeug (20) befindet, der größer ist als der erste Abstand.

15. Verfahren nach einem der Ansprüche 12 bis 14, wobei das Arbeitswerkzeug (20) und die Markiervorrichtung (30) auf entgegengesetzten Enden des Hauptkörpers (10) des Arbeitskopfs (1) montiert sind und wobei das Verfahren einen Schritt zum Drehen des Arbeitskopfs (1) über ein Bewegungssystem (110) der Werkzeugmaschine (100) umfasst, sodass das Arbeitswerkzeug (20) der Markiervorrichtung (30) wahlweise eingestellt wird, um auf dem Halbfertigerzeugnis zu arbeiten, wobei der Schritt zum Drehen des Arbeitskopfs (1) zwischen dem Schritt zum Bearbeiten des Halbfertigerzeugnisses und dem Schritt zum Markieren des Halbfertigerzeugnisses durchgeführt wird.

16. Verfahren nach einem der Ansprüche 12 bis 15, wobei das Arbeitswerkzeug (20) ein Schneidwerkzeug ist und wobei im Schritt zum Bearbeiten des Halbfertigerzeugnisses mindestens ein Schneidvorgang auf dem Halbfertigerzeugnis durchgeführt wird.

## Revendications

1. Machine outil (100) d'usinage de semi-produits en bois, comprenant :
- une table de travail définissant une surface de support pour un ou plusieurs semi-produits à usiner ;
- une tête de travail (1) configurée pour travailler sur les semi-produits et comprenant un corps principal (10) en forme de boîte pourvu d'un outil de travail (20) s'étendant à partir du corps principal (10), et un dispositif de marquage (30) ;
- un système de déplacement (110) configuré pour déplacer au moins la tête de travail (1) par rapport à la table de travail ;
- une unité de commande (U) configurée pour commander la machine outil (100) ;
**caractérisée en ce que** le dispositif de marquage (30) est configuré pour être commutable entre une configuration extraite, dans laquelle le dispositif de marquage (30) s'étend vers l'extérieur à partir du corps principal (10), et une configuration rétractée, dans laquelle le dispositif de marquage (30) est logé à l'intérieur du corps principal (10), et dans laquelle la tête de travail (1) comprend un mécanisme d'entraînement (40) configuré pour permettre au dispositif de marquage (30) d'être déplacé entre la configuration extraite et la configuration rétractée et vice versa.

2. Machine outil (100) selon la revendication 1, dans laquelle le corps principal (10) est de forme allongée le long d'un axe principal d'extension (X).

3. Machine outil (100) selon la revendication 1 ou 2, dans laquelle l'outil de travail (20) et le dispositif de marquage (30) sont montés sur des extrémités opposées du corps principal (10).

4. Machine outil (100) selon l'une quelconque des revendications précédentes, dans laquelle le corps principal (10) est pourvu d'un espace de confinement (13) pour loger au moins le dispositif de marquage (30) et le mécanisme d'entraînement (40) ;
l'espace de confinement (13) étant formé dans une portion périphérique du corps principal (10), l'espace de confinement (13) étant de préférence formé dans une paroi externe (14) du corps principal (10).

5. Machine outil (100) selon la revendication 4, dans laquelle le corps principal (10) comprend :
- une plaque de support (16) connectée de manière rotative au système de déplacement et définissant la paroi externe (14) dans laquelle l'espace de confinement (13) est formé ;
- un moteur (15), de préférence électrique, fixé solidement à la plaque de support (16) et connecté à l'outil de travail (20) pour entraîner l'outil de travail (20) .

6. Machine outil (100) selon l'une quelconque des revendications précédentes, dans laquelle le mécanisme d'entraînement (40) est configuré pour créer un couplage coulissant entre le corps principal (10) et le marqueur (30) ; le marqueur (30) étant mobile le long d'une trajectoire rectiligne entre la configuration extraite et la configuration rétractée et vice versa.

7. Machine outil (100) selon la revendication 6 lorsqu'elle dépend de la revendication 2, dans laquelle la trajectoire rectiligne est parallèle à l'axe principal d'extension (X).

8. Machine outil (100) selon l'une quelconque des revendications précédentes, dans laquelle le mécanisme d'entraînement (40) comprend un actionneur (50) pourvu d'une tige (51) reliée à l'unité de commande (U) et configurée pour déplacer le dispositif de marquage (30) entre la configuration extraite et la configuration rétractée et vice versa, le dispositif de marquage étant positionné à une extrémité de la tige (51).

9. Machine outil (100) selon la revendication 8, dans laquelle l'extrémité de la tige (51) définit un logement et la tête de marquage (31) du dispositif de marquage (30) est agencée dans le logement.

10. Tête de travail (1) pour machines outils (100), configurée pour effectuer des processus de coupe sur des semi-produits en bois, comprenant :
un corps principal (10) comprenant une plaque de support, pouvant être reliée de manière rotative à un système de déplacement (110) et pourvue d'un espace de confinement (13), et un moteur électrique (15), fixé à la plaque de support (16) ; le corps principal (10) étant pourvu d'un outil de travail (20), en particulier un outil de coupe, connecté au moteur (15), et d'un dispositif de marquage (30), logé dans l'espace de confinement (13) ;
**caractérisé en ce que** le dispositif de marquage est configuré pour être commutable entre une configuration extraite, dans laquelle le dispositif de marquage (30) fait saillie vers l'extérieur à partir du corps principal (10), et une configuration rétractée, dans laquelle le dispositif de marquage (30) est logé à l'intérieur du corps principal (10), et dans lequel la tête de travail (1) comprend un mécanisme d'entraînement (40) configuré pour permettre au dispositif de marquage (30) d'être déplacé entre la configuration extraite et la configuration rétractée et vice versa.

11. Tête de travail (1) selon la revendication 10, dans laquelle l'outil de travail (20) et le dispositif de marquage (30) sont montés sur des extrémités opposées du corps principal (10).

12. Procédé d'usinage de semi-produits allongés en bois, comprenant les étapes suivantes :
- alimenter un semi-produit sur une table de travail ;
- usiner le semi-produit avec un outil de travail (20) monté sur un corps principal (10) d'une tête de travail (1) ;
- marquer le semi-produit avec un dispositif de marquage (30) monté sur le corps principal (10) de la tête de travail (1) ;
**caractérisé en ce que** le dispositif de marquage (30), ou une partie de celui-ci comprenant une tête de marquage, est commuté entre une configuration rétractée dans laquelle le dispositif de marquage (30), ou la partie de celui-ci comprenant une tête de marquage, est logé à l'intérieur du corps principal (10), et une configuration extraite, dans laquelle le dispositif de marquage (30), ou la partie de celui-ci comprenant une tête de marquage, s'étend vers l'extérieur à partir du corps principal (10), et vice versa.

13. Procédé selon la revendication 12, dans lequel le dispositif de marquage (30), ou la partie de celui-ci comprenant une tête de marquage, est déplacé par un actionneur (50) le long d'une trajectoire rectiligne entre la configuration extraite et la configuration rétractée et vice versa.

14. Procédé selon la revendication 13, dans lequel, dans la configuration rétractée, le dispositif de marquage (30), ou la partie de celui-ci comprenant une tête de marquage, est à une première distance de l'outil de travail (20) et, dans la configuration extraite, le dispositif de marquage (30), ou la partie de celui-ci comprenant une tête de marquage, est à une seconde distance de l'outil de travail (20), supérieure à la première distance.

15. Procédé selon l'une quelconque des revendications 12 à 14, dans lequel l'outil de travail (20) et le dispositif de marquage (30) sont montés sur des extrémités opposées du corps principal (10) de la tête de travail (1), et dans lequel le procédé comprend une étape consistant à faire tourner la tête de travail (1) via un système de déplacement (110) de la machine outil (100) de manière à régler sélectivement l'outil de travail (20) du dispositif de marquage (30) pour travailler sur le semi-produit ; l'étape consistant à faire tourner la tête de travail (1) étant effectuée entre l'étape consistant à usiner le semi-produit et l'étape consistant à marquer le semi-produit.

16. Procédé selon l'une quelconque des revendications 12 à 15, dans lequel l'outil de travail (20) est un outil de coupe et dans lequel, dans l'étape consistant à usiner le semi-produit, au moins une opération de coupe est effectuée sur le semi-produit.
